# EUROPEAN PATENT SPECIFICATION

(11) **EP 2 225 086 B1**
(45) Date of publication and mention of the grant of the patent: **27.06.2012**
(21) Application number: 08861656.0
(22) Date of filing: 07.10.2008
(51) Int. Cl.: B29C 49/48, A43B 13/20, B29C 49/04

(54) **METHOD AND MOULD FOR MOLDING A FLUID-FILLED STRUCTURE**
VERFAHREN UND FORM ZUM FORMEN EINER MIT FLUID GEFÜLLTEN STRUKTUR
PROCÉDÉ ET MOULE PERMETTANT LE MOULAGE D'UNE STRUCTURE REMPLIE DE FLUIDE

(30) Priority: 17.12.2007 US 957676
(43) Date of publication of application: 08.09.2010
(73) Proprietor: Nike International Ltd., Beaverton, OR 97005-6453 (US)
(72) Inventor: FORSTROM, Stuart, C., Beaverton, OR 97005-6453 (US); HENSLEY, Shaun, J., Beaverton, OR 97005-6453 (US); BRUNAIS, William, A., Beaverton, OR 97005-6453 (US)
(74) Representative: Tombling, Adrian George
(86) International application number: PCT/US2008/079082
(87) International publication number: WO 2009/079074

(56) References cited:
- BE-A- 671 537
- JP-A- 6 247 237
- JP-A- 7 171 886
- JP-A- 61 148 023
- US-A- 1 497 592
- US-A- 4 829 682
- US-A1- 2006 177 537

## Description

### BACKGROUND

Articles of footwear generally include two primary elements, an upper and a sole structure. The upper is formed from a variety of material elements (e.g., textiles, foam, leather, and synthetic leather) that are stitched or adhesively bonded together to form a void on the interior of the footwear for comfortably and securely receiving a foot. An ankle opening through the material elements provides access to the void, thereby facilitating entry and removal of the foot from the void. In addition, a lace is utilized to modify the dimensions of the void and secure the foot within the void.

The sole structure is located adjacent to a lower portion of the upper and is generally positioned between the foot and the ground. In many articles of footwear, including athletic footwear, the sole structure conventionally incorporates an insole, a midsole, and an outsole. The insole is a thin compressible member located within the void and adjacent to a lower surface of the void to enhance footwear comfort. The midsole, which may be secured to a lower surface of the upper and extends downward from the upper, forms a middle layer of the sole structure. In addition to attenuating ground reaction forces (i.e., providing cushioning for the foot), the midsole may limit foot motions or impart stability, for example. The outsole, which may be secured to a lower surface of the midsole, forms the ground-contacting portion of the footwear and is usually fashioned from a durable and wear-resistant material that includes texturing to improve traction.

The conventional midsole is primarily formed from a foamed polymer material, such as polyurethane or ethylvinylacetate, that extends throughout a length and width of the footwear. In some articles of footwear, the midsole may include a variety of additional footwear elements that enhance the comfort or performance of the footwear, including plates, moderators, fluid-filled chambers, lasting elements, or motion control members. In some configurations, any of these additional footwear elements may be located between the midsole and either of the upper and outsole, embedded within the midsole, or encapsulated by the foamed polymer material of the midsole, for example. Although many conventional midsoles are primarily formed from a foamed polymer material, fluid-filled chambers or other non-foam structures may form a majority of some midsole configurations.

Fluid-filled chambers may be formed through a variety of processes, including two-sheet bonding, thermoforming, rotational molding, and blowmolding, for example. In general, a blowmolding process involves locating a parison between mold portions defining a cavity with a shape of the chamber. The parison is a generally tubular and hollow structure formed from a molten, softened, or partially cured polymer material. Pressurized air induces the polymer material of the parison to conform with the shape of the cavity within the mold. The polymer material then cools, thereby forming the chamber.

### SUMMARY

The present invention provides a mold for forming a fluid-filled chamber as defined in the appended claims.

The present invention provides a method of manufacturing a fluid-filled chamber as defined in the appended claims.

The advantages and features of novelty characterizing aspects of the invention are pointed out with particularity in the appended claims. To gain an improved understanding of the advantages and features of novelty, however, reference may be made to the following descriptive matter and accompanying figures that describe and illustrate various configurations and concepts related to the invention.

### FIGURE DESCRIPTIONS

The foregoing Summary and the following Detailed Description will be better understood when read in conjunction with the accompanying figures.

Figure 1 is a perspective view of a first chamber.

Figure 2 is a cross-sectional view of the first chamber, as defined by section line 2-2 in Figure 1.

Figures 3A-3H are perspective views of additional chamber configurations.

Figures 4A and 4B are perspective views of a mold.

Figures 5A and 5B are exploded perspective views of the mold.

Figures 6A-6E are side elevational views of the mold depicting a process for forming the chamber.

Figures 7A-7E are cross-sectional views of the mold, as defined by section lines 7-7 in Figures 4A and 4B, that correspond with Figures 6A-6E and depict the process for forming the chamber.

Figure 8 is a perspective view of the chamber and residual material following the process for forming the chamber.

Figure 9 is a lateral side elevational view of an article of footwear.

Figure 10 is a medial side elevational view of the article of footwear.

Figure 11 is a perspective view of a fluid-filled second chamber from a sole structure of the article of footwear.

Figure 12 is another perspective view of the second chamber.

Figure 13 is a top plan view of the second chamber.

Figure 14 is a bottom plan view of the second chamber.

Figure 15 is a lateral side elevational view of the second chamber.

Figure 16 is a medial side elevational view of the second chamber.

Figure 17 is a top plan view of another configuration of the second chamber.

Figure 18 is a perspective view of the mold with a configuration that is suitable for forming the second chamber.

### DETAILED DESCRIPTION

The following discussion and accompanying figures disclose methods for manufacturing fluid-filled chambers with a variety of configurations. As an example, which is discussed below, chambers manufactured with the methods may be utilized in articles of footwear. In addition to footwear, the methods may be utilized to manufacture chambers for various types of apparel and athletic equipment, including helmets, gloves, and protective padding for sports such as football and hockey. Similar methods may be utilized to manufacture chambers for cushions and other compressible structures utilized in consumer goods and industrial products. Accordingly, methods incorporating the concepts disclosed herein may be utilized to manufacture chambers for a variety of products and for a variety of purposes.

### General Chamber Structure

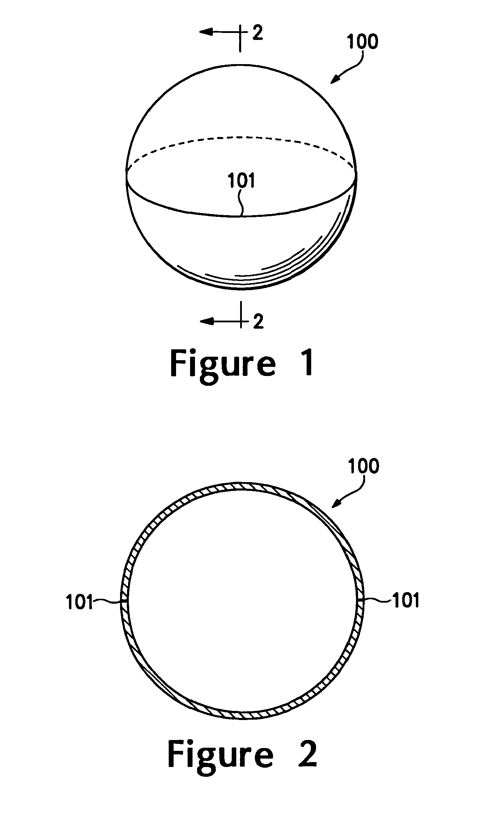

A chamber 100 is depicted in Figure 1 as having a substantially spherical structure. Chamber 100 is formed from a polymer material that encloses a fluid (e.g., a gas). The polymer material forms an outer surface of chamber 100 and has a hollow configuration that provides a sealed structure for enclosing the fluid, as depicted in Figure 2. Chamber 100 may be formed through a blowmolding process, as described in greater detail below, that shapes the polymer material and seals the polymer material to enclose the fluid. In shaping the polymer material and sealing the polymer material, a parting line 101 is formed where opposite sides of the polymer material (i.e., a parison) are bonded together.

A variety of polymer materials may be utilized for chamber 100. In selecting a polymer material for chamber 100, engineering properties of the polymer material (e.g., tensile strength, stretch properties, fatigue characteristics, dynamic modulus, and loss tangent) as well as the ability of the material to limit the diffusion of the fluid contained by chamber 100 may be considered. When formed of thermoplastic urethane, for example, the polymer material of chamber 100 may have a thickness of approximately 1.0 millimeter, but the thickness may range from 0.25 to 4.0 millimeters or more, for example. In addition to thermoplastic urethane, examples of polymer materials that may be suitable for chamber 100 include polyurethane, polyester, polyester polyurethane, polyether polyurethane, and polyurethane including a polyester polyol. Accordingly, a variety of polymer materials may be utilized for chamber 100.

The fluid within chamber 100 may have a pressure that is substantially equal to the pressure of air on the exterior of chamber 100 (i.e., atmospheric pressure). That is, the pressure of the fluid within chamber 100 is at substantially ambient pressure. As utilized herein, "substantially ambient pressure" or variants thereof are intended to encompass pressure differences between zero and thirty-five kilopascals (i.e., approximately five pounds per square inch) from atmospheric pressure. Depending upon the intended use of chamber 100, however, the pressure of the fluid may significantly exceed thirty-five kilopascals. In some configurations, chamber 100 may incorporate a valve that permits the pressure of the fluid to be adjusted. A variety of fluids may be enclosed by the polymer material of chamber 100, including either air or nitrogen, for example.

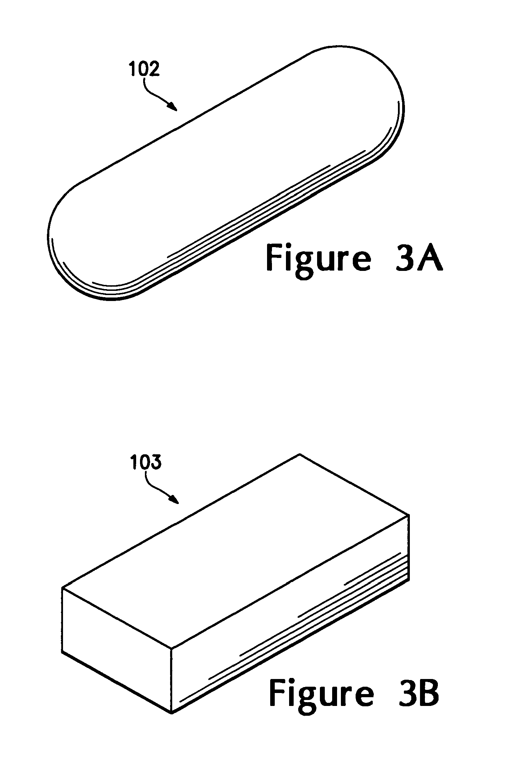

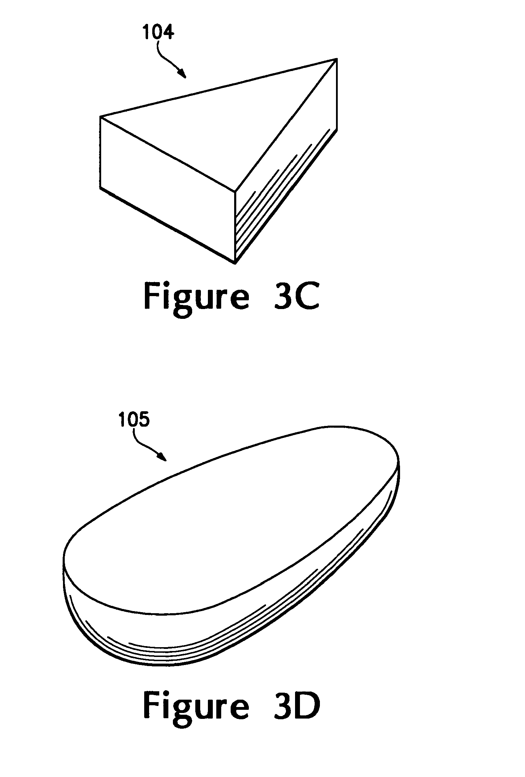

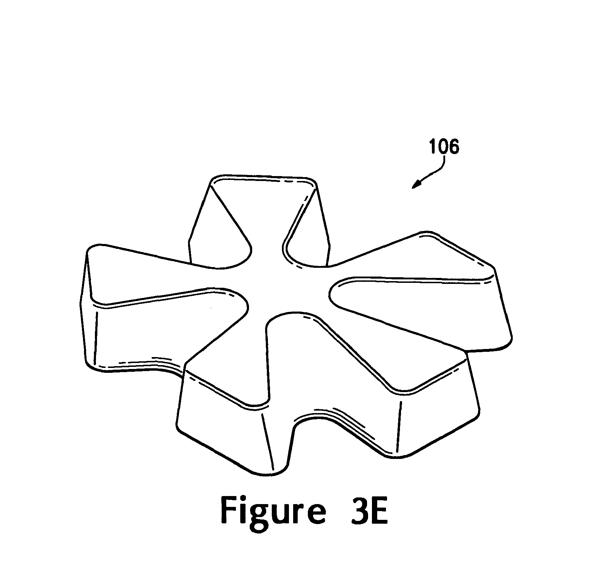

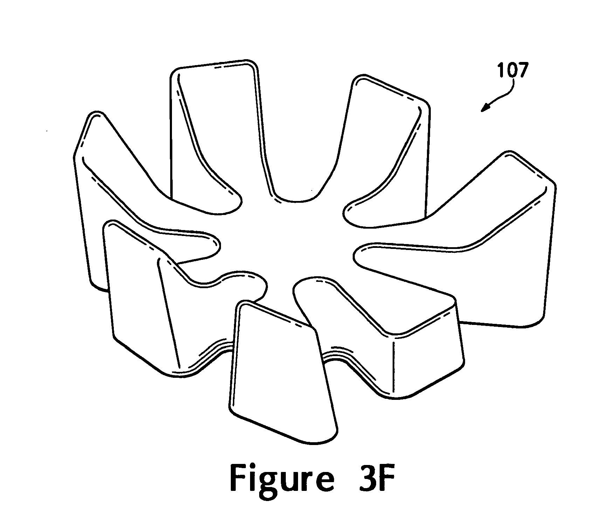

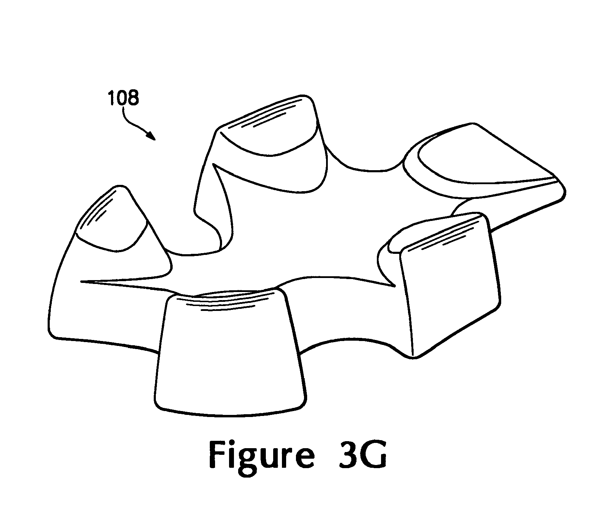

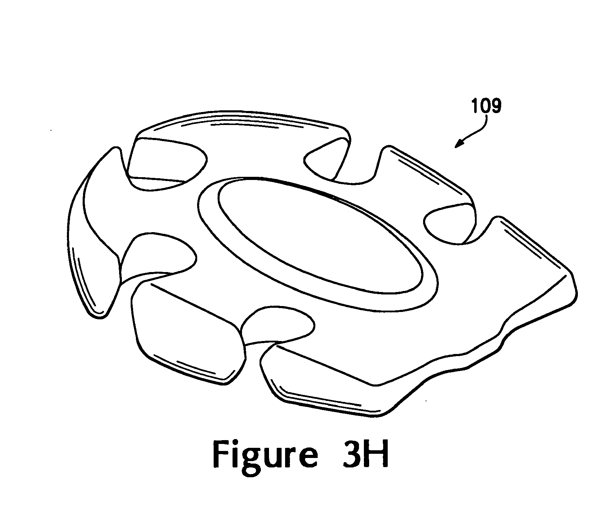

Although chamber 100 is depicted as having a spherical shape, chambers with similar structures (i.e., a polymer material that encloses a fluid) may have a variety of configurations. Referring to Figure 3A, a chamber 102 with an elongate and generally cylindrical configuration is depicted. Figure 3B depicts a chamber 103 with a generally rectangular configuration, and Figure 3C depicts a chamber 104 with a generally triangular configuration. Any of chambers 100-104 may be utilized in as a variety of products, including toys, packing materials, or cushions, for example. A chamber 105 is depicted in Figure 3D as having a pear-shaped configuration with a generally planar surface, a sloping sidewall, and an opposite surface that may be planar or curved, as disclosed in U.S. Patent Numbers 6,796,056; 7,073,276; and 7,243,443 to Swigart. Figures 3E and 3F respectively depict a pair of chambers 106 and 107 with lobed configurations, as disclosed in U.S. Patent Number 7,000,335 Swigart, et al. and U.S. Patent Number 7,128,796 to Hensley, et al. Each of chambers 105-107 may be incorporated into sole structure of various articles of footwear, for example, in addition to other products. Additional chambers 108 and 109, which may also be utilized in footwear applications, are respectively depicted in Figures 3G and 3H. Although the following material discloses a manufacturing process for chamber 100, a substantially similar manufacturing process may be utilized for each of chambers 102-109.

### Blowmolding Process

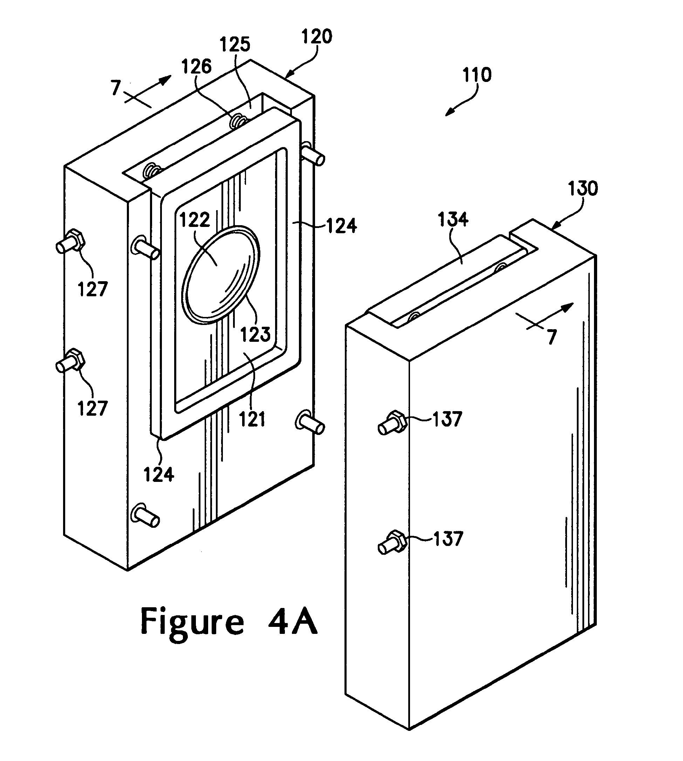

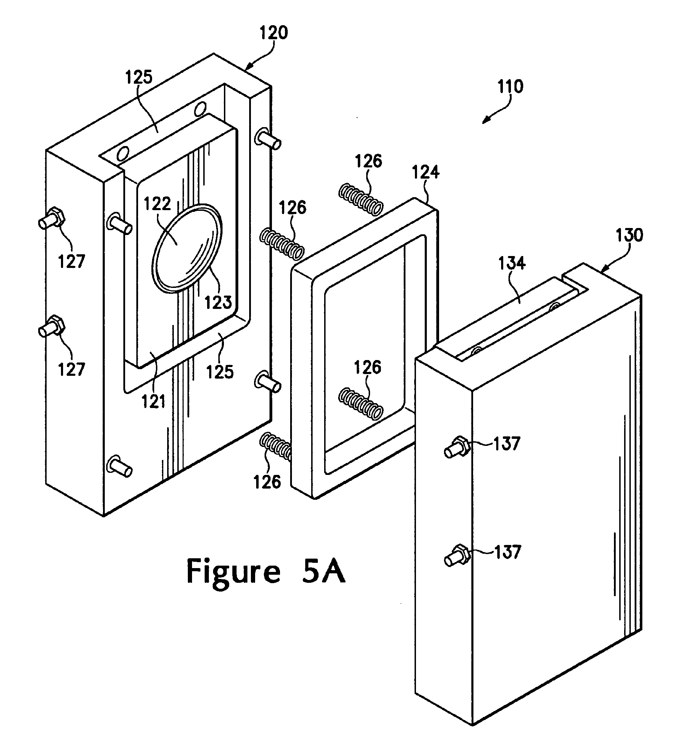

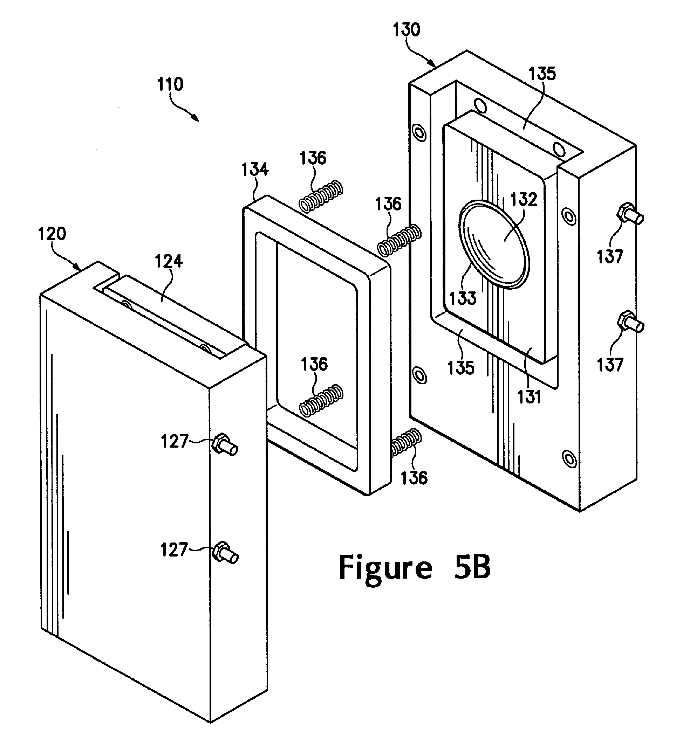

A mold 110 that may be utilized to manufacture chamber 100 is depicted in Figures 4A-5B as including a first mold portion 120 and a second mold portion 130. First mold portion 120 includes a surface 121, a cavity 122, a ridge 123, a frame 124, a channel 125, and a plurality of springs 126. Surface 121 faces toward second mold portion 130 and defines cavity 122, which is formed as an indented area or a depression in surface 121 and has a generally hemispherical shape that corresponds with approximately one-half of chamber 100. Ridge 123 protrudes outward from surface 121 and extends around a perimeter of cavity 122. Frame 124 extends around cavity 122 and has a generally rectangular shape, but may have a variety of other shapes. Whereas ridge 122 is positioned immediately adjacent to an edge of cavity 122 and may form a portion of the edge of cavity 122, frame 124 is spaced from cavity 122. Frame 124 is positioned within channel 125 and is mounted on springs 126, which permit frame 124 to at least partially retract into channel 125. First mold portion 120 also includes a pair of connectors 127 that join with vacuum lines or fluid supply lines during the manufacture of chamber 100. Each of connectors 127 form end areas of conduits that extend through first mold portion 120. The conduits may, for example, join with vents on surface 121 and within cavity 122 remove air during the manufacture of chamber 100, or the conduits may channel heated liquids that raise the temperature of first mold portion 120.

As noted above, springs 126 permit frame 124 to at least partially retract into channel 125. More particularly, springs 126 permit frame 124 to translate into first mold portion 120. When springs 126 are uncompressed or in a neutral state, frame 124 extends outward beyond surface 121, as depicted in Figure 4A. When a force is applied to frame 124, however, springs 126 compress and permit frame 124 to at least partially retract into channel 125, thereby locating an outward-facing surface of frame 124 in a position that is closer to surface 121. In some configurations, frame 124 may be substantially flush or level with surface 121. Accordingly, frame 124 is movable from a first position, wherein frame 124 extends outward from surface 121, to a second position, wherein frame 124 is at least partially retracted into channel 125.

Second mold portion 130 has a structure that is similar to first mold portion 120 and includes a surface 131, a cavity 132, a ridge 133, a frame 134, a channel 135, and a plurality of springs 136. Surface 131 faces toward first mold portion 120 and defines cavity 132, which is formed as an indented area or a depression in surface 131 and has a generally hemispherical shape that corresponds with approximately one-half of chamber 100. When mold portions 120 and 130 are joined, cavities 122 and 132 form a void within mold 100 with the shape and dimensions of chamber 100. Ridge 133 protrudes outward from surface 131 and extends around a perimeter of cavity 132. Frame 134 extends around cavity 132 and has a generally rectangular shape, but may have a variety of other shapes. Whereas ridge 132 is positioned immediately adjacent to an edge of cavity 132 and may form a portion of the edge of cavity 132, frame 134 is spaced from cavity 132. Frame 134 is positioned within channel 135 and is mounted on springs 136, which permit frame 134 to at least partially retract into channel 135. First mold portion 130 also includes a pair of connectors 137 that join with vacuum lines or fluid supply lines during the manufacture of chamber 100. As with connectors 127, each of connectors 127 form end areas of conduits that extend through second mold portion 130.

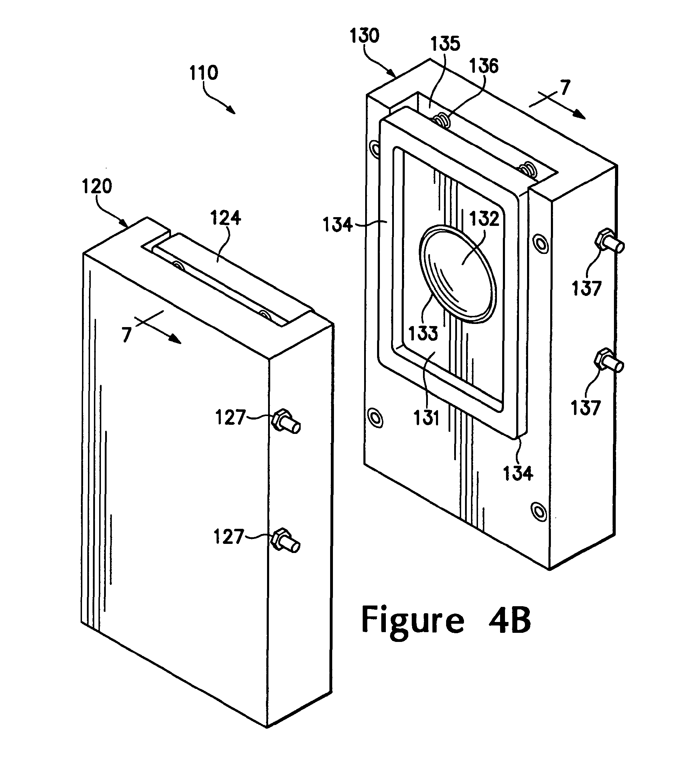

As noted above, springs 136 permit frame 134 to at least partially retract into channel 135. When springs 136 are uncompressed or in a neutral state, frame 134 extends outward beyond surface 131, as depicted in Figure 4B. When a force is applied to frame 134, however, springs 136 compress and permit frame 134 to retract into channel 135, thereby locating an outward-facing surface of frame 134 in a position that is closer to surface 131. Accordingly, frame 134 is movable from a first position, wherein frame 134 extends outward from surface 131, to a second position, wherein frame 134 is retracted into channel 135.

Frames 124 and 134 each have a continuous configuration that extends around cavities 122 and 132. That is, frames 124 and 134 have an unbroken or otherwise non-segmented configuration that does not include gaps or spaces. Some prior molds incorporate retractable frames with non-continuous configurations, as disclosed in U.S. Patent Number 4,829,682 to Gasbarro. These non-continuous frames include spaces or indentations that permit inflation needles or blow pins, for example, to pressurize the interior of a polymer parison. In contrast with the frames disclosed in Gasbarro, however, frames 124 and 134 each have a continuous configuration that does not include spaces or indentations for needles or blow pins.

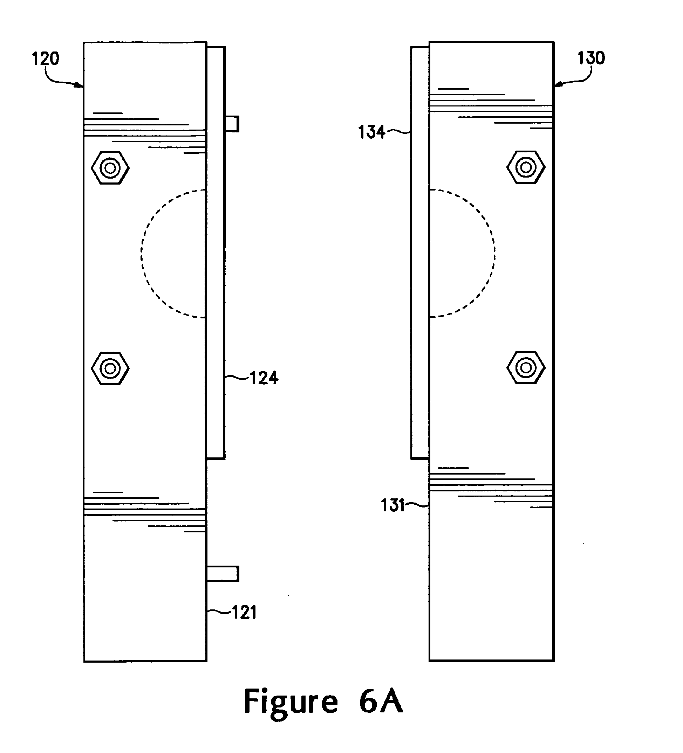

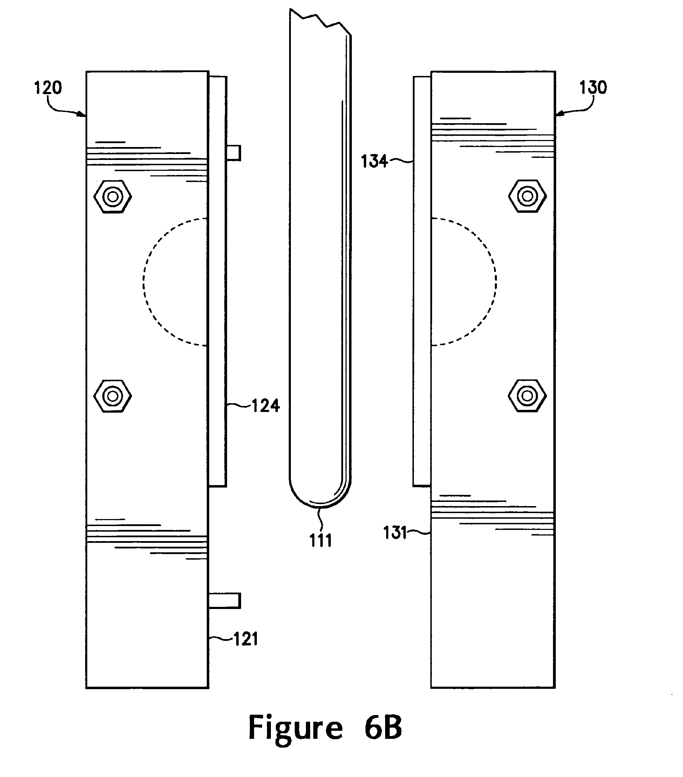

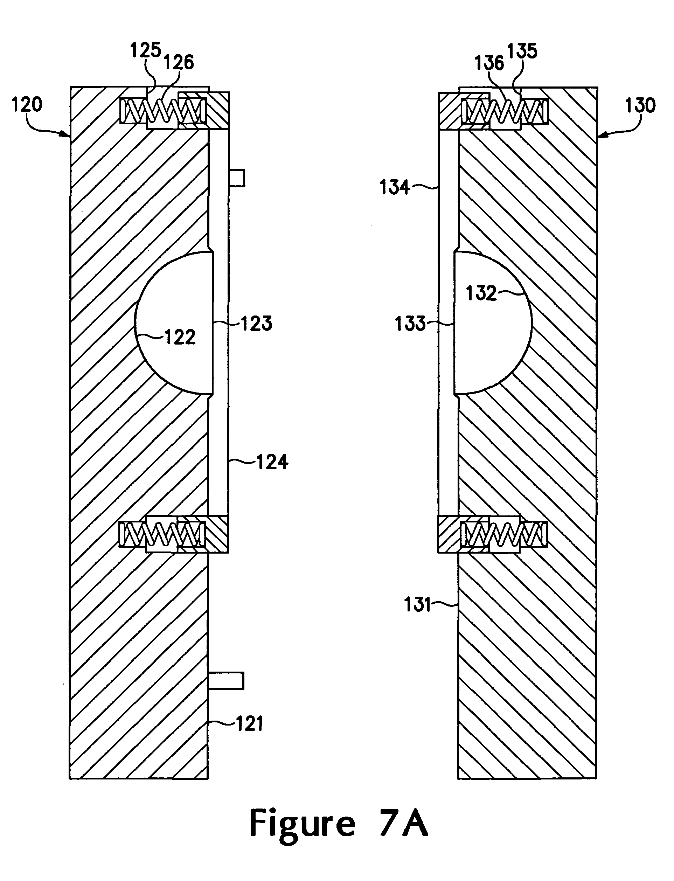

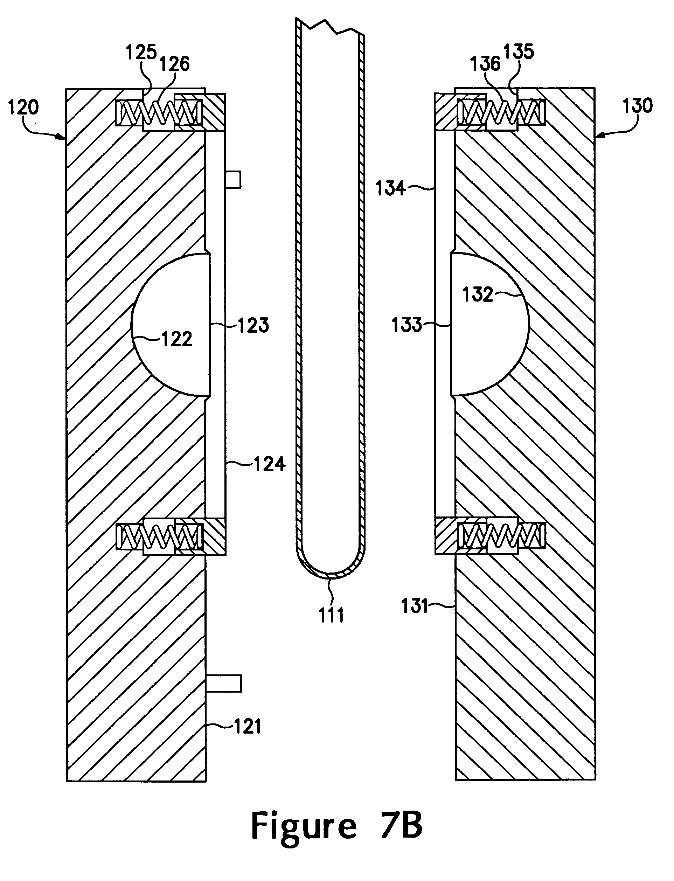

Mold 110 is utilized to manufacture chamber 100 through a blowmolding process. Initially, mold portions 120 and 130 are arranged such that surfaces 121 and 131 face each other, as depicted in Figures 6A and 7A. More particularly, mold portions 120 and 130 are arranged such that cavities 122 and 132 are aligned with each other and frames 124 and 134 are aligned with each other. A parison 111 is then located between mold portions 120 and 130, as depicted in Figure 6B and 7B. Parison 111 is a hollow structure formed from the molten, partially molten, or uncured polymer material that is selected for chamber 100. A length of parison 111 (i.e., dimension extending vertically) is at least the height of frames 124 and 134, but may extend above and below frames 124 and 134. Although a thickness of parison 111 (i.e., dimension in a direction extending between mold portions 120 and 130) is relatively narrow, a depth of parison 111 (i.e., dimension extending parallel to and across surfaces 121 and 131 is at least the width of frames 124 and 134. A die located above mold portions 120 and 130 may be utilized to extrude parison 111, or parison 111 may be preformed.

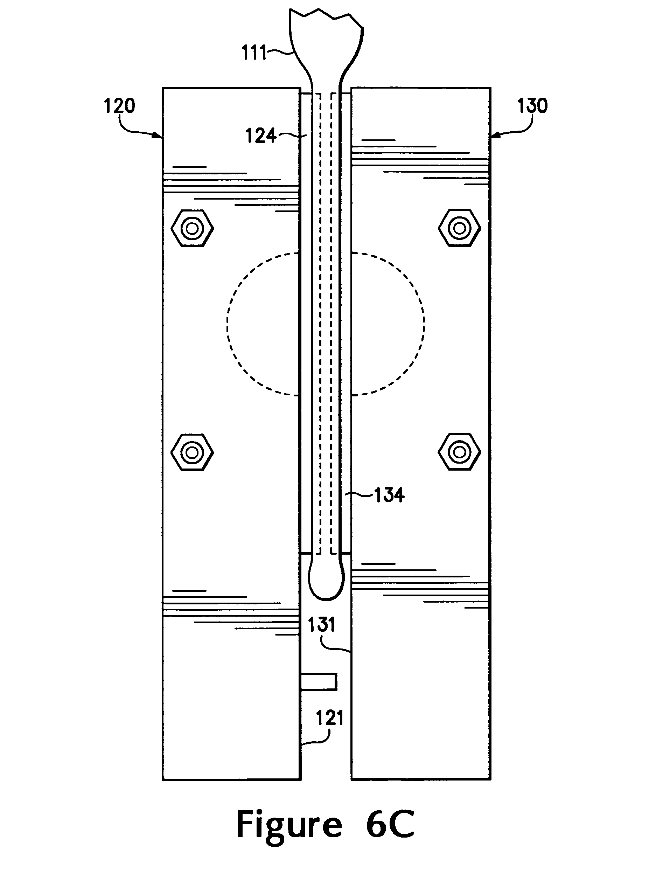

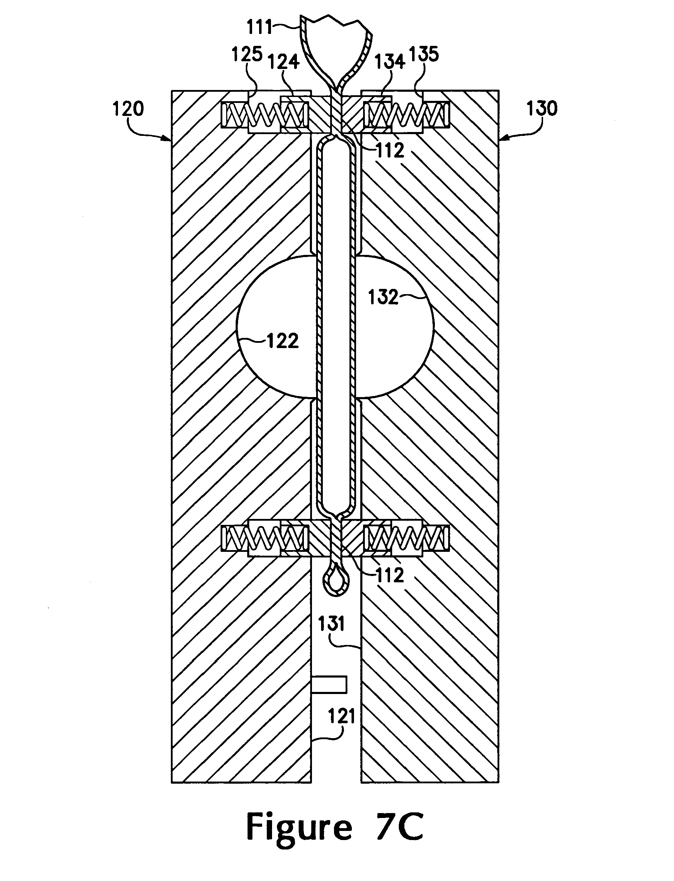

Once parison 111 is properly positioned, mold portions 120 and 130 begin to translate toward each other. Given that frames 124 and 134 extend outward from and beyond surfaces 121 and 131, frames 124 and 134 initially contact parison 111 and compress opposite sides of parison 111 together, as depicted in Figures 6C and 7C. Frames 124 and 134 have a rectangular configuration with an open central areas that expose surfaces 121 and 131. When frames 124 and 134 contact and compress opposite sides of parison 111, frames 124 and 134 form a bond 112 between the opposite sides of parison 111 in the area of frames 124 and 134. Portions of parison 111 corresponding with the open central areas of frames 124 and 134 remain, however, unbonded at this stage of the manufacturing process. Accordingly, frames 124 and 134 form bond 112 between opposite sides of parison 111, and bond 112 exhibits a rectangularly-shaped structure.

The rectangular-shaped bond 112 in parison 111 that is formed by frames 124 and 134 effectively traps or otherwise seals a fluid (e.g., air or another gas located within the hollow interior of parison 111) within parison 111. As noted above, portions of parison 111 corresponding with the open central areas of frames 124 and 134 remain unbonded. Accordingly, the fluid within the unbonded portions of parison 111 is effectively sealed within parison 111 because the bonds and the polymer material forming parison 111 prevent the fluid from escaping. Moreover, bond 112 extends entirely around the trapped fluid.

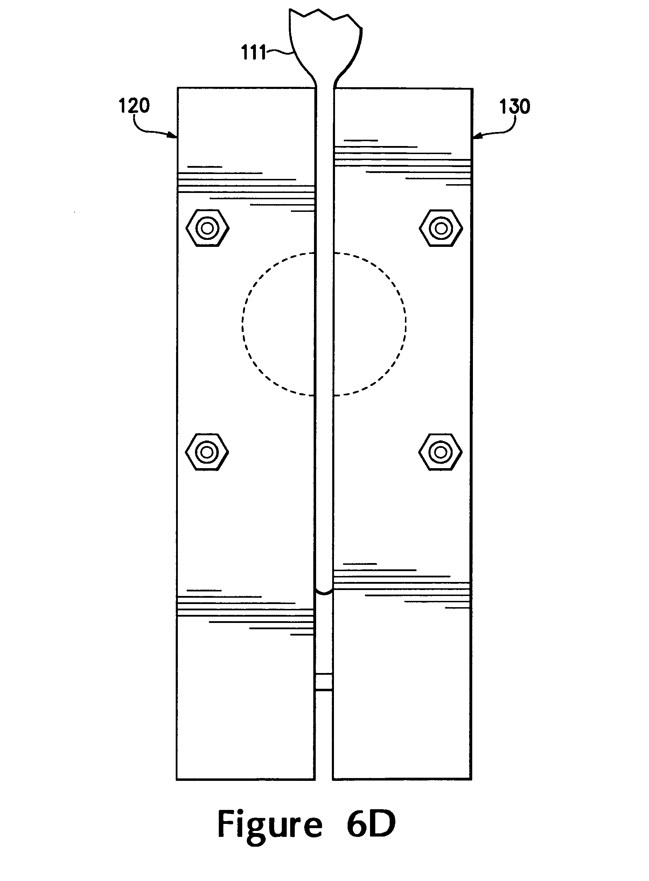

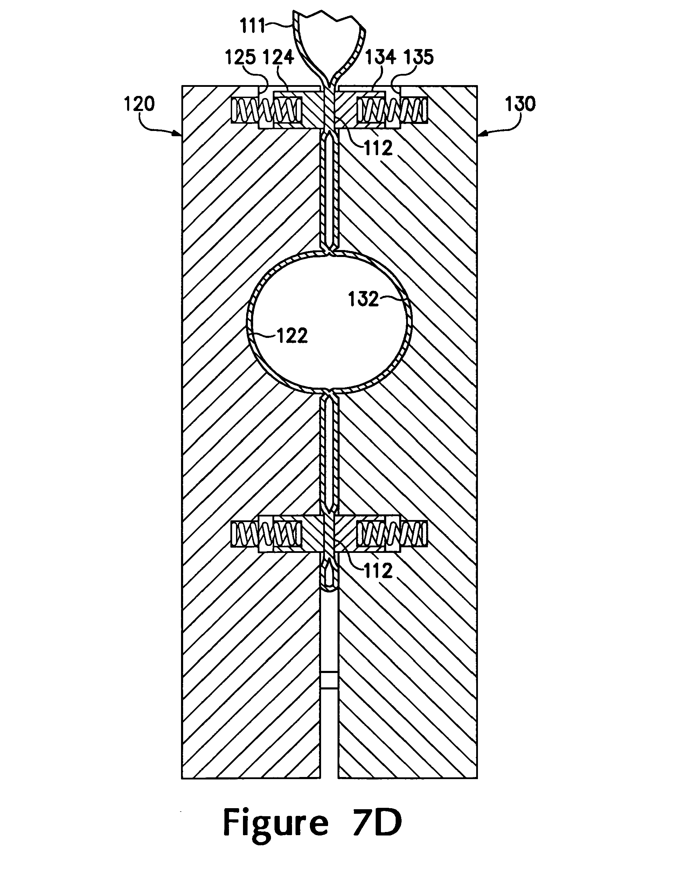

Once frames 124 and 134 form bond 112 between the opposite sides of parison 111, mold portions 120 and 130 continue to translate toward each other. More particularly, springs 126 and 136 compress and permit frames 124 and 134 to at least partially recess into mold portions 120 and 130 such that surfaces 121 and 131 contact each other or come close to contacting each other, as depicted in Figures 6D and 7D. Although the fluid sealed within parison 111 remains at substantially ambient pressure, pressure from surfaces 121 and 131 causes parison 111 to conform with the contours of surfaces 121 and 131. More particularly, the trapped fluid within parison 111 induces the polymer material of parison 111 to enter cavities 122 and 132 and conform with the shapes of cavities 122 and 132. Air may also be removed from the area between parison 111 and mold portions 120 and 130 through vents in surfaces 121 and 131 that are fluidly-joined with connectors 127 and 137, thereby drawing the polymer material of parison 111 onto surfaces 121 and 131. That is, at least a partial vacuum may be formed between parison 111 and surfaces 121 and 131.

As the fluid trapped within parison 111 is compressed between surfaces 121 and 131 and air is removed from the area between parison 111 and surfaces 121 and 131, the polymer material of parison 111 conforms to the shape of mold 100. More specifically, the polymer material stretches, bends, or otherwise conforms to extend along surfaces 121 and 131 and form the general shape of chamber 100. Ridges 123 and 133 also compress the polymer material together around cavities 122 and 132 to form parting line 101 immediately adjacent to chamber 100. More particularly, ridges 123 and 133 form another bond (i.e., parting line 101) between opposite sides of parison 111 and around chamber 100.

When frames 124 and 134 formed bond 112 between opposite sides of parison 111, a volume of fluid is trapped or otherwise sealed within parison 111. As mold portions 120 and 130 continue to translate toward each other, a portion of that volume of fluid becomes trapped within chamber 100. That is, frames 124 and 134 form bond 112 to trap a first volume of fluid within parison 111, and a second and lesser volume of the fluid is then sealed within chamber 100 due to the bond formed at parting line 101. The remaining fluid (i.e., the fluid not within chamber 100) may remain trapped between other portions of parison 111. As described in greater detail below, some molds may simultaneously form multiple chambers, and separate portions of the trapped fluids may become sealed within each of the multiple chambers.

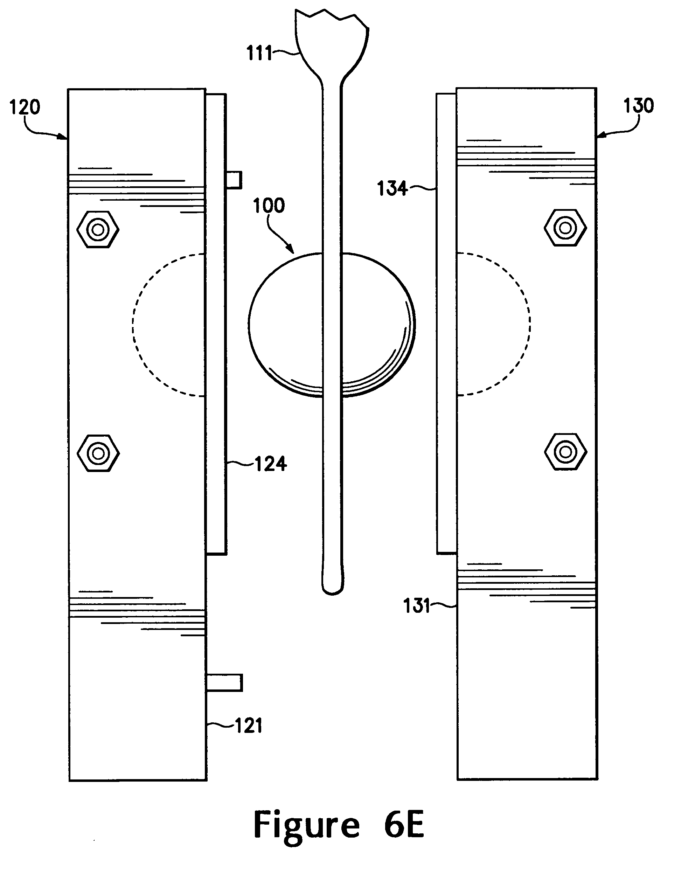

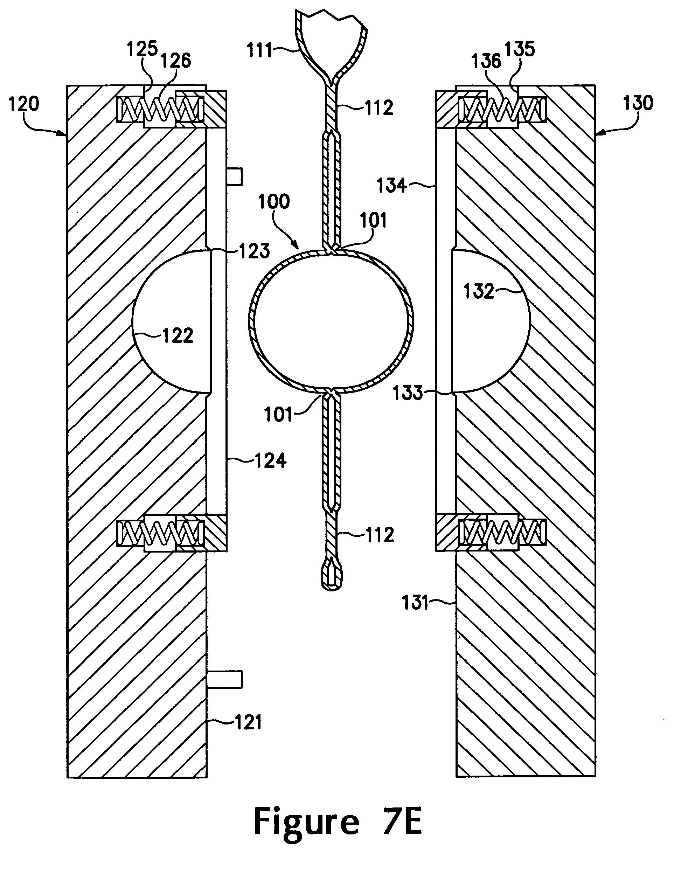

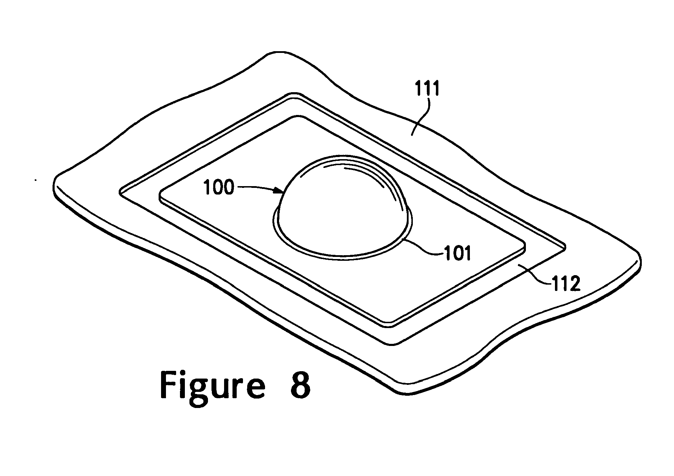

Once chamber 100 is formed, mold portions 120 and 130 separate such that chamber 100 and excess portions of parison 111 may be removed, as depicted in Figures 6E and 7E, and permitted to cool. At this stage of the manufacturing process, chamber 100 and the excess portions of parison 111 have the configuration depicted in Figure 8. Referring to Figure 8, bond 112 is shown as having a rectangular configuration that extends entirely around chamber 100. Whereas chamber 100 was formed by cavities 122 and 132 and ridges 123 and 133, bond 112 was formed by frames 124 and 134. That is, frames 124 and 134 compressed opposite sides of parison 111, as discussed above in relation to Figures 6C and 7C, to form bond 112. Chamber 100 is then separated from the excess portions of parison 111, thereby substantially completing the manufacturing process for chamber 100, and the excess portions of parison 111 may be recycled.

Based upon the above discussion, frames 124 and 134 are incorporated into mold 110 in order to initially form bond 112, which seals fluid within parison 111 prior to the formation of chamber 100. The fluid then provides resistance to compression that is sufficient to induce the polymer material of parison 111 to enter and conform with the shapes of cavities 122 and 132. A portion of the trapped fluid also remains within chamber 100 and is at substantially ambient pressure following the blowmolding process.

The configuration of mold 110 discussed above and depicted in the figures provides an example of a suitable mold configuration. When forming any of chambers 102-109, for example, the configurations of cavities 122 and 132 may be altered to have shapes that cooperatively define the chambers. In some configurations, frames 124 and 134 may have different shapes (e.g., square, triangular, circular, octagonal, irregular), the spacing between frames 124 and 134 and each of cavities 122 and 132 may change, or the surfaces of frames 124 and 134 may be non-planar. In further configurations, frame 134 may be absent from second mold portion 130, such that frame 124 compresses parison 111 against surface 131 to form bond 112. In addition, surfaces 121 and 131 may each define multiple cavities, thereby permitting more than one chamber 100 to be formed from each parison 111. Accordingly, the specific configuration of mold 110 may vary significantly.

Although frame 124 is discussed above and depicted as being mounted on springs 126, other systems may be utilized to permit frame 124 to retract into first mold portion 120. Similarly, other systems may also be utilized to permit frame 134 to retract into second mold portion 130. For example, a hydraulic or pneumatic system may be utilized to control the motion of frame 124. That is, the hydraulic or pneumatic system may be computer-controlled to properly position frame 124 throughout the blowmolding process. When computer controlled, the pressure exerted by frame 124 and the position of frame 124 may be controlled throughout the molding process. As an alternative, servos or other devices may be utilized to control the movements of frame 124. Accordingly, a variety of devices and systems may be utilized in connection with frames 124 and 134.

### Footwear Structure

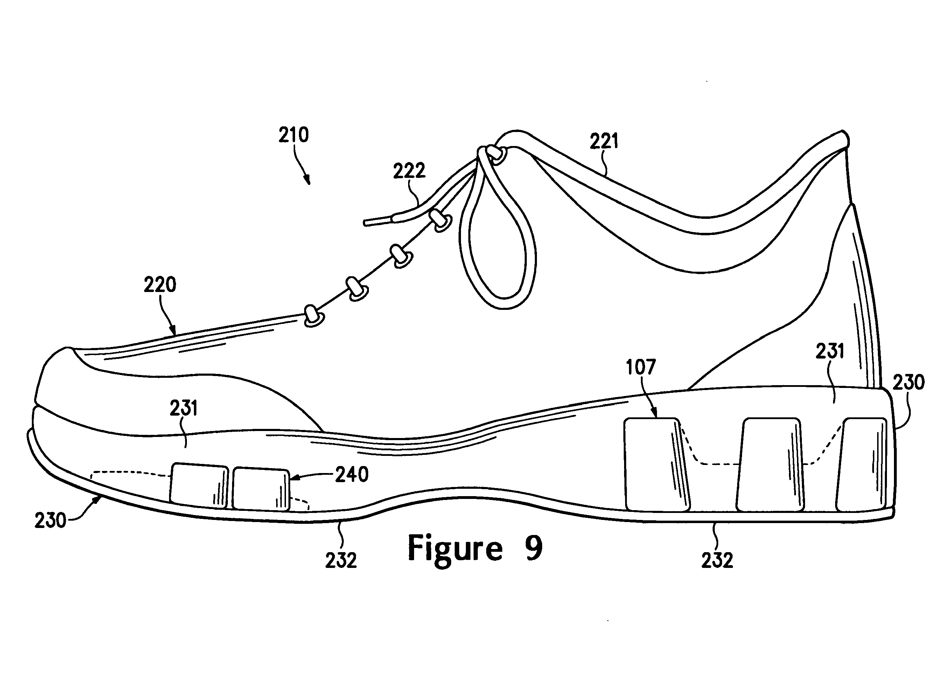

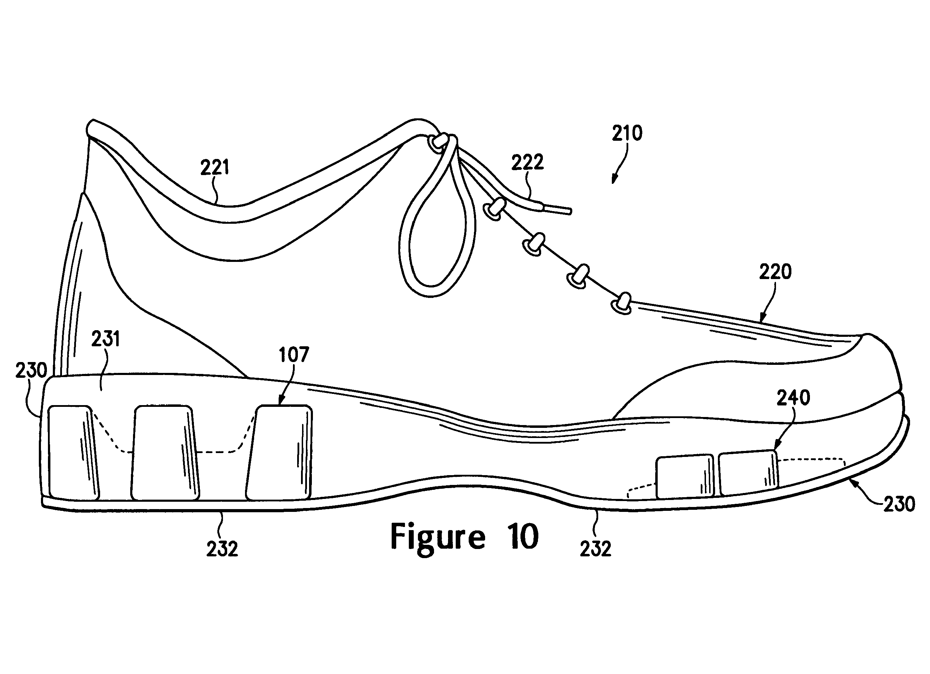

The general method discussed above may be utilized to form chambers with a variety of shapes and configurations, and the chambers may be utilized in a variety of products or for a variety of purposes. As a specific example of one product that may include a chamber formed through this general method, an article of footwear 210 is depicted in Figures 9 and 10 as including an upper 220 and a sole structure 230. Upper 220 is depicted as having a substantially conventional configuration incorporating a plurality material elements (e.g., textiles, foam, leather, and synthetic leather) that are stitched or adhesively bonded together to form an interior void for securely and comfortably receiving a foot. The material elements may be selected and located with respect to upper 220 in order to selectively impart properties of durability, air-permeability, wear-resistance, flexibility, and comfort, for example. An ankle opening 221 in a heel region of footwear 210 provides access to the interior void. In addition, upper 220 may include a lace 222 that is utilized in a conventional manner to modify the dimensions of the interior void, thereby securing the foot within the interior void and facilitating entry and removal of the foot from the interior void. Lace 222 may extend through apertures in upper 220, and a tongue portion of upper 220 may extend between the interior void and lace 222. Given that various aspects of the present application primarily relate to sole structure 230, upper 220 may exhibit the general configuration discussed above or the general configuration of practically any other conventional or non-conventional upper. Accordingly, the structure of upper 220 may vary significantly.

Sole structure 230 is secured to upper 220 and has a configuration that extends between upper 220 and the ground. The primary elements of sole structure 230 are a midsole 231 and an outsole 232. Midsole 231 may be formed from a polymer foam material, such as polyurethane or ethylvinylacetate, that encapsulates a fluid-filled chamber 240 and another fluid-filled chamber 107 to enhance the ground reaction force attenuation characteristics of sole structure 230. Whereas chamber 240 is discussed in greater detail below, chamber 107 has the general configuration depicted in Figure 3F and disclosed in U.S. Patent Number 7,000,335 to Swigart, et al. In addition to the polymer foam material and chambers 240 and 107, midsole 231 may incorporate one or more plates, moderators, or reinforcing structures, for example, that further enhance the ground reaction force attenuation characteristics of sole structure 230 or the performance properties of footwear 210. Outsole 232, which may be absent in some configurations of footwear 210, is secured to a lower surface of midsole 231 and may be formed from a rubber material that provides a durable and wear-resistant surface for engaging the ground. Outsole 232 may also be textured to enhance the traction (i.e., friction) properties between footwear 210 and the ground. In addition, sole structure 230 may incorporate an insole or sockliner (not depicted) that is located with in the void in upper 220 and adjacent a plantar (i.e., lower) surface of the foot to enhance the comfort of footwear 210.

### Chamber Configuration

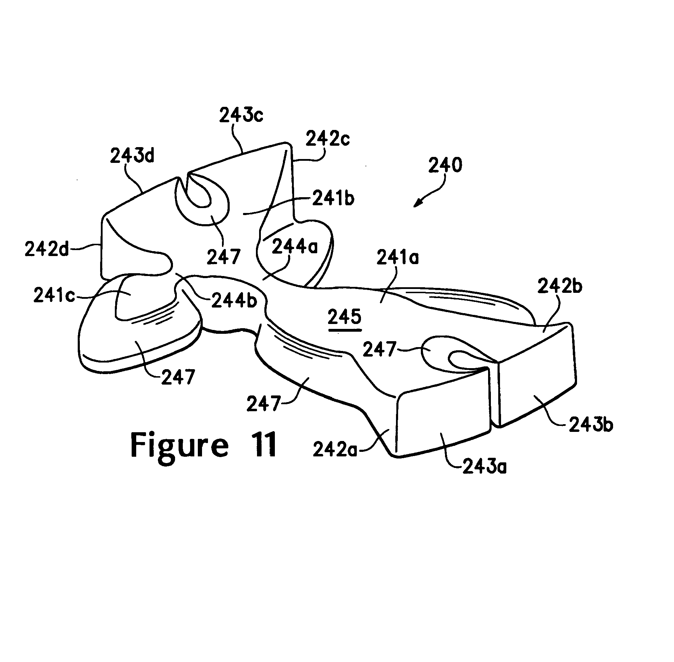

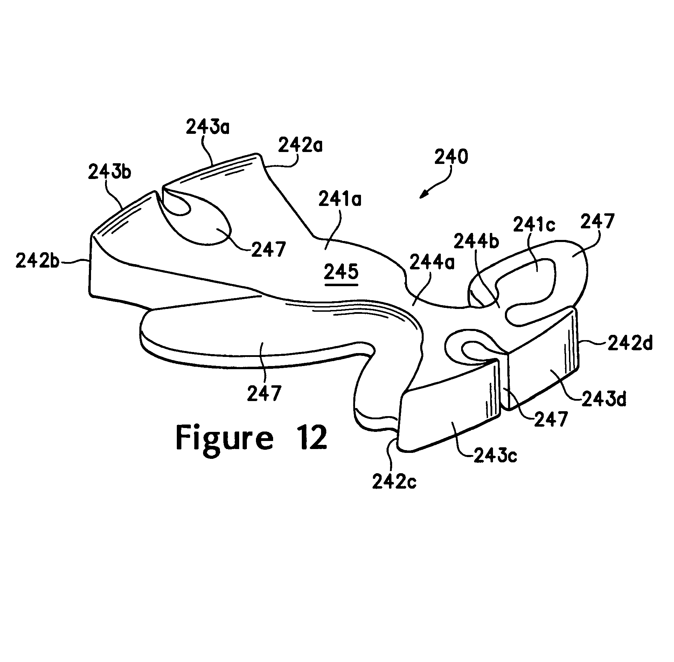

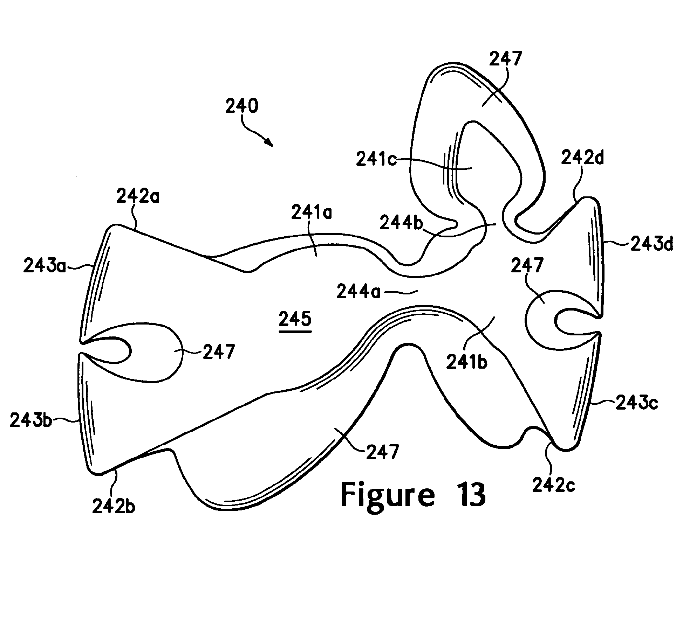

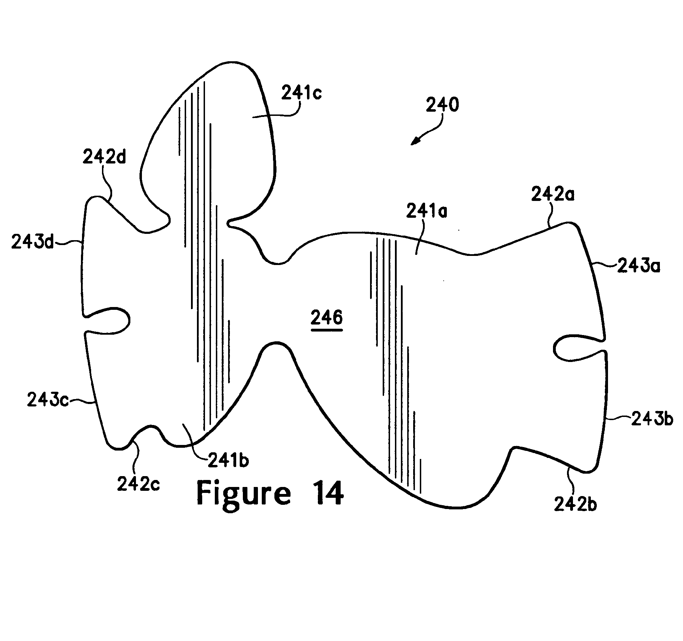

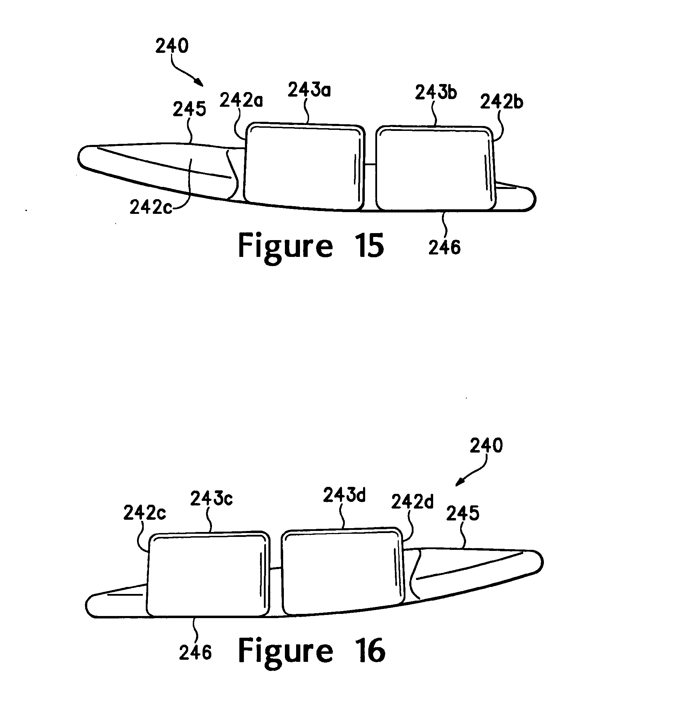

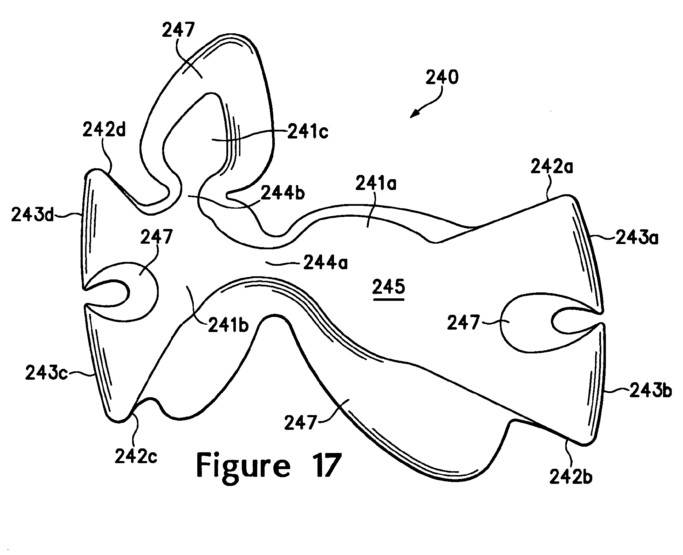

Chamber 240 is located within a forefoot region of footwear 210 and extends from a lateral side to a medial side of midsole 231. Referring to Figures 11-16, chamber 240 includes a first subchamber 241 a, a second subchamber 241 b, a third subchamber 241 c, seven lobes 242a-42d, and seven corresponding distal ends 243a-43d. In addition, chamber 240 includes a pair of conduits 244a and 244b, a first surface 245, a second surface 246, and a sidewall 247. Chamber 240 has an asymmetrical configuration and is most suitable for use with the left foot, as discussed in greater detail below. Accordingly, chamber 240 may be manufactured to have a substantially identical, but reversed, configuration that is most suitable for use with the right foot, as depicted in Figure 17. The polymer material forming the exterior or outer barrier of chamber 240 encloses a fluid (i.e., air or nitrogen) with substantially ambient pressure. A wide range of polymer materials may be utilized for chamber 240, including any of the materials discussed above for chamber 100.

Subchambers 241a-241c form a majority of a volume of chamber 240 and are fluidly-connected by conduits 244a and 244b. More particularly, conduit 244a extends between first subchamber 241 a and second subchamber 241 b to permit fluid flow between subchambers 241 a and 241 b. Similarly, conduit 244b extends between second subchamber 241 b and third subchamber 241 c to permit fluid flow between subchambers 241b and 241 c. If first subchamber 241 a is compressed, the fluid within first subchamber 241a may pass through conduit 244a and into second subchamber 241 b, and a portion of the fluid within second subchamber 241 b may pass through conduit 244b and into third subchamber 241c. If third subchamber 241c is compressed, the fluid within third subchamber 241 c may pass through conduit 244b and into second subchamber 241 b, and a portion of the fluid within second subchamber 241b may pass through conduit 244a and into first subchamber 241 a. Similarly, if second subchamber 241b is compressed, the fluid within second subchamber 241b may pass through both of conduits 244a and 244b and into each of subchambers 241 a and 241 c. Accordingly, subchambers 241 a-241 c are in fluid communication with each other through conduits 244a and 244b.

Lobes 242a and 242b extend outward from first subchamber 241a and are in fluid communication with first subchamber 241a. If first subchamber 241a is compressed, as discussed above, a portion of the fluid within first subchamber 241 a may also pass into lobes 242a and 242b. Similarly, lobes 242c and 242d extend outward from second subchamber 241 b and are in fluid communication with second subchamber 241 b. In addition to passing through conduits 244a and 244b, fluid may pass into lobes 242a-242d if either of subchambers 241 a-241 c are compressed. The number and location of lobes 242a-242d may vary significantly. In many configurations of chamber 240, however, each of subchambers 241 a and 241 b will generally have at least two of the lobes 242a-242d, but may have up to ten lobes each. In some configurations, one or more lobes may also extend outward from third subchamber 241 c.

Distal ends 243a-243d form end areas of lobes 42a-242d and are located opposite subchambers 241 a and 241 b, respectively. When chamber 40 is incorporated into footwear 210, distal ends 243a-243d may protrude through a sidewall of midsole 231. More particularly, lobes 242a and 242b may extend to a lateral side of footwear 210 such that distal ends 243a and 243b protrude through a sidewall of midsole 231, and lobes 242c and 242d may extend to an opposite medial side of footwear 210 such that distal ends 243c and 243d protrude through an opposite portion of the sidewall of midsole 231. In some configurations of footwear 210, however, distal ends 243a-243d may be wholly located within midsole 231, or distal ends 243a-243d may protrude outward and beyond the sidewall of midsole 231.

First surface 245 forms an upper surface of chamber 240 and has a generally planar configuration. Second surface 246 is located opposite first surface 245 and also has a generally planar configuration. In some configurations of chamber 240, first surface 245 or second surface 246 may also have a generally curved or non-planar configuration. In comparison with first surface 245, second surface 246 has a greater surface area. More particularly, second surface 246 is depicted as having approximately twice as much surface area as first surface 245, but may range from being substantially equal to having ten times as much surface area, for example. To account for the differences in surface area, sidewall 247 extends from a periphery of first surface 245 and slopes downward to a periphery of second surface 246. In comparison with sidewall 247, which slopes downward, distal ends 243a-243d have a substantially vertical orientation.

The typical motion of the foot during running includes rolling from the outside or lateral side to the inside or medial side, which is referred to as pronation. Chamber 240 complements the motion of the foot during running through the relative locations of the various components of chamber 240. First subchamber 241 a is generally located in a lateral portion of footwear 210, and subchambers 241 b and 241 c are generally located in a medial portion of footwear 210. In this configuration, at least a portion of first subchamber 241 a and lobes 242a and 242b underlie the third, fourth, and fifth metatarsophalangeal joints (i.e., the joints respectively between the third, fourth, and fifth metatarsals and the third, fourth, and fifth proximal phalanges). Similarly, at least a portion of second subchamber 241b and lobes 242c and 242d underlie the first and second metatarsophalangeal joints (i.e., the joints respectively between the first and second metatarsals and the first and second proximal phalanges). In addition, at least a portion of third subchamber 241 c underlies the first proximal phalanx and first distal phalanx (i.e., the big toe).

Based upon the positions of the various portions of chamber 240 discussed above, the foot may initially compress first subchamber 241 a, which is located in the lateral portion of footwear 210 during running. As first subchamber 241 a is compressed, the pressure of the fluid within first subchamber 241 a increases and a portion of the fluid passes through conduit 244a and into second subchamber 241 b. This has the effect of decreasing the compressibility of second subchamber 241 b and assists with inhibiting rolling of the foot from the lateral side to the medial side. As the foot rolls from the lateral side to the medial side, however, second subchamber 241 b is compressed and the fluid within second subchamber 241 b passes through conduit 244b and increases the pressure of the fluid within third subchamber 241 c. This has the effect of decreasing the compressibility of third subchamber 241c and assists with pushing off, which occurs as the foot rolls forward and as the foot is leaving the ground.

Another factor that affects the compressibility of chamber 240 and roll of the foot relates to the slope of sidewall 247. Referring to Figures 11-13, for example, the slope of sidewall 247 associated with first subchamber 241 a is different in forward and rear areas. In the rear area of first subchamber 241 a the slope of sidewall 247 is relatively shallow, whereas the slope of sidewall 247 is greater in the forward area of first subchamber 241 a. The differences in slope affect the compressibility of first subchamber 241 a and the degree to which the foot rolls. More particularly, the shallower slope in the rear area of first subchamber 241 a facilitates compression and roll of the foot. As the foot rolls forward and toward the forward area of first subchamber 241 a, the greater slope of sidewall 247 inhibits compression of first subchamber 241 a and slows the roll of the foot. That is, areas of first subchamber 241 a with a relatively shallow slope (i.e., the rear area) are more compressible than areas of first subchamber 41 a with a greater slope (i.e., the forward area).

Differences in slope of sidewall 247 are also present in second subchamber 241 b and third subchamber 241 c. In second subchamber 241 b, sidewall 247 has a relatively shallow slope in areas that are adjacent to first subchamber 241 a and a greater slope in areas adjacent lobes 242c and 242d. As with first subchamber 241 a, areas of second subchamber 241 b with a relatively shallow slope are more compressible than areas of second subchamber 241 b with a greater slope. This facilitates roll of the foot toward second subchamber 241 b, but limits further roll of the foot toward the medial portion of footwear 210. Similarly, third subchamber 241c has a configuration wherein sidewall 247 is relatively steep in areas adjacent to second subchamber 241b, but is more shallow in forward areas of third subchamber 241 c, thereby facilitating pushing off.

### Blowmolding Process

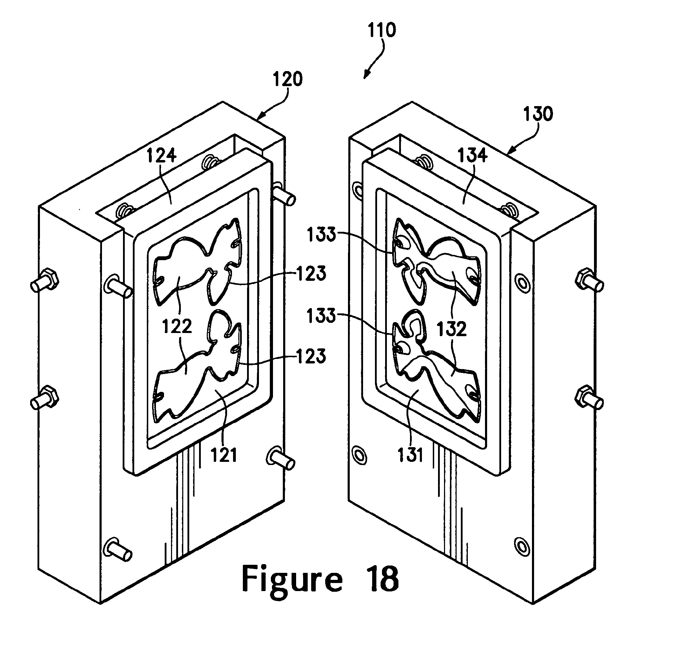

Mold 110 is depicted as having a configuration that is suitable for forming two of chamber 240 in Figure 18. More particularly, mold 110 may be utilized to form a first chamber 240 that is most suitable for use with the left foot, and mold 110 may be utilized to form a second chamber 240 that is most suitable for use with the right foot. As such, surface 121 defines two cavities 122, and surface 131 defines two corresponding cavities 132. When mold portions 120 and 130 are joined, cavities 122 and 132 form voids within mold 100 with the shape and dimensions of chamber 240.

The general blowmolding process discussed above for chamber 100 may also be utilized for chamber 240. Accordingly, a parison may be located between mold portions 120 and 130, and frames 124 and 134 may initially bond portions of the parison as mold portions 120 and 130 initially translate toward each other. The initial bond formed by frames 124 and 134 traps or otherwise seals fluid within the parison. As mold portions 120 and 130 continue to translate toward each other, the trapped fluid induces the polymer material of the parison to enter cavities 122 and 132, thereby shaping the polymer material. Ridges 123 then form additional bonds (i.e., parting lines) between opposite sides of the parison to seal a portion of the trapped fluid within each of the two chambers 240. Upon removal from mold 110, the two chambers 240 are separated from a remainder of the parison. Accordingly, a variety of chambers with different configurations may be formed with the general blowmolding process discussed above for chamber 100.

The invention is disclosed above and in the accompanying figures with reference to a variety of configurations. The purpose served by the disclosure, however, is to provide an example of the various features and concepts related to the invention, not to limit the scope of the invention. One skilled in the relevant art will recognize that numerous variations and modifications may be made to the configurations described above without departing from the scope of the present invention, as defined by the appended claims.

## Claims

1. A mold (110) for forming a fluid-filled chamber (100), the mold comprising:
a first mold portion (120) that includes a first surface (121) and a first cavity (122) formed in the first surface, and the first mold portion including a continuous first frame (124) that does not include spaces or indentations for needles or blow pins and extends entirely around the first cavity, the first frame being movable from a position that extends outward beyond the first surface to a position that is at least partially retracted within the first mold portion; and
a second mold portion (130) that includes a second surface (131) and a second cavity (132) formed in the second surface, and the second mold (130) portion includes a second frame (134) that does not include spaces or indentations for needles or blow pins and extends around the second cavity (132), the second frame of the second mold portion being movable from a position that extends outward beyond the second surface (131) to a position that is at least partially retracted within the second mold portion,
wherein the first cavity and the second cavity have a shape of the chamber when the mold portions are joined together.

2. The mold (110) recited in claim 1, wherein the first frame (124) is spaced from the first cavity (122).

3. The mold (110) recited in claim 1, wherein the first frame (124) is mounted on springs (126), the springs being substantially uncompressed when the first frame extends outward beyond the first surface (121), and the springs being compressed when the first frame is at least partially retracted within the first mold portion (120).

4. The mold (110) recited in claim 1, wherein the first and second frames are aligned with each other when the mold portions are joined together.

5. The mold (110) recited in claim 4, wherein the first frame (124) and the second frame (134) have rectangular configurations.

6. The mold (110) recited in claim 1, wherein the first mold portion (120) includes two of the first cavity (122) and the second mold (130) portion includes two of the second cavity (132).

7. A method of manufacturing a fluid-filled chamber (100) using the mold (110) recited in claim 1, the method comprising:
forming a first bond (112) between opposite sides of a parison (111) with first and second frames (124, 134) that do not include spaces or indentations for needles or blow pins to seal a first volume of a fluid within the parison, the first bond extending entirely around the first volume of the fluid;
forming a second bond (101) that is spaced inward from the first bond and between opposite sides of the parison to seal a second volume of the fluid within the parison, the second volume of the fluid being less than the first volume of the fluid and a portion of the first volume of the fluid;
shaping the chamber from a portion of the parison that is located inward of the second bond; and
separating the chamber from a remainder of the parison at the second bond.

8. The method recited in claim 7, further including a step of forming a third bond that is spaced inward from the first bond (112) and between opposite sides of the parison (111) to trap a third volume of the fluid within the parison, the third volume of the fluid being less than the first volume of the fluid and a portion of the first volume of the fluid, and the third volume of the fluid being separate from the second volume of the fluid.

9. The method recited in claim 8, further including a step of separating another chamber (100) from the remainder of the parison at the third bond.

10. The method recited in claim 7, further including a step of incorporating the chamber into an article of footwear (210).

11. The method of claim 7 comprising:
locating the parison between:
the first mold portion (120) and the second mold portion (130);
moving the mold portions toward the parison such that the frames contact and compress opposite sides of the parison to form the first bond (112) between the opposite sides of the parison; and
compressing the parison between the mold portions such that opposite sides of the parison are shaped within the cavities to define the chamber and form the second bond (101) immediately adjacent to the chamber.

12. The method recited in claim 11, wherein the step of moving the mold portions (120, 130) includes positioning the frames (124, 134) in an extended position, wherein the first frame extends outward from the first surface (121) and the second frame extends outward from the second surface (131).

13. The method recited in claim 12, wherein the step of compressing the parison (111) includes positioning the frames (124, 134) in a retracted position, wherein the first frame is at least partially retracted into the first mold portion (120) and the second frame is at least partially retracted into the second mold portion (130).

14. The method recited in claim 11, wherein the step of compressing the parison (111) includes forming a vacuum between the parison and each of the first surface (121) and the second surface (131).

15. The method of claim 7 comprising:
locating the parison (111) between:
the first mold portion (120) and the second mold portion (130);
positioning the frames in an extended position, wherein the first frame extends outward from the first surface and the second frame extends outward from the second surface;
with the frames in the extended position, moving the mold portions toward the parison such that the frames contact and compress opposite sides of the parison to (a) form the first bond (112) between the opposite sides of the parison (b) seal the first volume of a fluid within the pari son;
positioning the frames in a retracted position, wherein the first frame is at least partially retracted into the first mold portion and the second frame is at least partially retracted into the second mold portion;
with the frames in the retracted position, compressing the parison between the mold portions such that opposite sides of the parison are shaped within the cavities to define the chamber (100) and form the second bond (101) immediately adjacent to the chamber.

## Patentansprüche

1. Form (110) zum Bilden einer mit Fluid gefüllten Kammer (100), wobei die Form aufweist:
einen ersten Formabschnitt (120), der eine erste Oberfläche (121) und einen ersten Hohlraum (122) umfasst, der in der ersten Oberfläche gebildet ist, und wobei der erste Formabschnitt einen kontinuierlichen ersten Rahmen (124) umfasst, der keine Räume oder Vertiefungen für Nadeln oder Blasdorne umfasst und sich vollständig um den ersten Hohlraum erstreckt, und wobei der erste Rahmen von einer Position, die sich nach außen jenseits der ersten Oberfläche erstreckt, zu einer Position, die zumindest teilweise innerhalb des ersten Formabschnittes zurückgezogen ist, bewegbar ist; und
einen zweiten Formabschnitt (130), der eine zweite Oberfläche (131) und einen zweiten Hohlraum (132) umfasst, der in der zweiten Oberfläche gebildet ist, wobei der zweite Formabschnitt (130) einen zweiten Rahmen (134) umfasst, der keine Räume oder Vertiefungen für Nadeln oder Blasdorne enthält und sich um den zweiten Hohlraum (132) erstreckt, und wobei der zweite Rahmen des zweiten Formabschnittes von einer Position, die sich nach außen jenseits der zweiten Oberfläche (131) erstreckt, zu einer Position, die zumindest teilweise innerhalb des zweiten Formabschnittes zurückgezogen ist, bewegbar ist,
wobei der erste Hohlraum und der zweiten Hohlraum eine Formgestaltung der Kammer besitzen, wenn die Formabschnitte zusammengefügt sind.

2. Form (110) nach Anspruch 1, wobei der erste Rahmen (124) von dem ersten Hohlraum (122) beabstandet ist.

3. Form (110) nach Anspruch 1, wobei der erste Rahmen (124) auf Federn (126) gehaltert ist, und wobei die Federn im Wesentlichen unkomprimiert sind, wenn der erste Rahmen sich nach außen jenseits der ersten Oberfläche (121) erstreckt, und wobei die Federn komprimiert sind, wenn der erste Rahmen zumindest teilweise innerhalb des ersten Formabschnittes (120) zurückgezogen ist.

4. Form (110) nach Anspruch 1, wobei der erste und der zweite Rahmen miteinander ausgerichtet sind, wenn die Formabschnitte zusammengefügt sind.

5. Form (110) nach Anspruch 4, wobei der erste Rahmen (124) und der zweite Rahmen (134) rechtwinklige Konfigurationen besitzen.

6. Form (110) nach Anspruch 1, wobei der erste Formabschnitt (120) zwei erste Hohlräume (122) und der zweite Formabschnitt (130) zwei zweite Hohlräume (132) umfasst.

7. Verfahren zum Herstellen einer mit Fluid gefüllten Kammer (100) unter Verwendung der Form (110) nach Anspruch 1, wobei das Verfahren aufweist:
Bilden einer ersten Bindung (112) zwischen gegenüberliegenden Seiten eines Vorformlings (111) mittels erster und zweiter Rahmen (124, 134), die keine Räume oder Vertiefungen für Nadeln oder Blasdorne umfassen, um ein erstes Volumen eines Fluids innerhalb des Vorformlings einzukapseln, wobei die erste Bindung sich vollständig um das erste Volumen des Fluids erstreckt;
Bilden einer zweiten Bindung (101), die nach innen von der ersten Bindung beabstandet ist und zwischen gegenüberliegenden Seiten des Vorformlings liegt, um ein zweites Volumen des Fluids innerhalb des Vorformlings einzukapseln, wobei das zweite Volumen des Fluids kleiner als das erste Volumen des Fluids und einem Teil des ersten Volumens des Fluids ist;
formgebendes Gestalten der Kammer aus einem Abschnitt des Vorformlings, der sich einwärts der zweiten Bindung befindet; und
Trennen der Kammer von einem übrigen Teil des Vorformlings an der zweiten Bindung.

8. Verfahren nach Anspruch 7, des Weiteren umfassend einen Schritt des Bildens einer dritten Bindung, die einwärts der ersten Bindung (112) beabstandet ist und zwischen gegenüberliegenden Seiten des Vorformlings (111) liegt, um ein drittes Volumen des Fluids innerhalb des Vorformlings einzuschließen, wobei das dritte Volumen des Fluids kleiner als das erste Volumen des Fluids und einem Teil des ersten Volumens des Fluids ist, und wobei das dritte Volumen des Fluids getrennt von dem zweiten Volumen des Fluids ist.

9. Verfahren nach Anspruch 8, des Weiteren umfassend einen Schritt des Trennens einer weiteren Kammer (100) von dem übrigen Teil des Vorformlings an der dritten Bindung.

10. Verfahren nach Anspruch 7, des Weiteren umfassend einen Schritt des Aufnehmens der Kammer in ein Schuhwerk (210).

11. Verfahren nach Anspruch 7, aufweisend:
Anordnen des Vorformlings zwischen:
dem ersten Formabschnitt (120) und dem zweiten Formabschnitt (130);
Bewegen der Formabschnitte zu dem Vorformling hin derart, dass die Rahmen in Kontakt mit gegenüberliegenden Seiten des Vorformlings treten und diesen komprimieren, um die erste Bindung (112) zwischen den gegenüberliegenden Seiten des Vorformlings zu bilden; und
Komprimieren des Vorformlings zwischen den Formabschnitten derart, dass die gegenüberliegenden Seiten des Vorformlings innerhalb der Hohlräume derart formgestaltet werden, dass sie die Kammer festlegen und die zweite Bindung (101) unmittelbar benachbart der Kammer bilden.

12. Verfahren nach Anspruch 11, wobei der Schritt des Bewegens der Formabschnitte (120, 130) das Anordnen der Rahmen (124, 134) in einer ausgefahrenen Position umfassen, und wobei der erste Rahmen sich nach außen von der ersten Oberfläche (121) erstreckt und der zweite Rahmen sich nach außen von der zweiten Oberfläche (131) erstreckt.

13. Verfahren nach Anspruch 12, wobei der Schritt des Komprimierens des Vorformlings (111) das Anordnen der Rahmen (124, 134) in einer zurückgezogenen Position umfasst, und wobei der erste Rahmen zumindest teilweise in den ersten Formabschnitt (120) zurückgezogen ist, und der zweite Rahmen zumindest teilweise in den zweiten Formabschnitt (130) zurückgezogen ist.

14. Verfahren nach Anspruch 11, wobei der Schritt des Komprimierens des Vorformlings (111) das Bilden eines Vakuums zwischen dem Vorformling und jeweils der ersten Oberfläche (121) und der zweiten Oberfläche (131) umfasst.

15. Verfahren nach Anspruch 7, aufweisend:
Anordnen des Vorformlings (111) zwischen:
dem ersten Formabschnitt (120) und dem zweiten Formabschnitt (130);
Anordnen der Rahmen in einer ausgefahrenen Position, wobei der erste Rahmen sich nach außen von der ersten Oberfläche erstreckt, und der zweite Rahmen sich nach außen von der zweiten Oberfläche erstreckt;
Bewegen der Formabschnitte zu dem Vorformling hin derart, dass die Rahmen in Kontakt mit gegenüberliegenden Seiten des Vorformlings treten und diesen zusammendrücken, um (a) die erste Bindung (112) zwischen den gegenüberliegenden Seiten des Vorformlings zu bilden, und (b) das erste Volumen eines Fluids innerhalb des Vorformlings einzukapseln, während die Rahmen sich in der ausgefahrenen Position befinden;
Anordnen der Rahmen in einer zurückgezogenen Position, wobei der erste Rahmen zumindest teilweise in den ersten Formabschnitt zurückgezogen ist, und der zweiten Rahmen zumindest teilweise in den zweiten Formabschnitt zurückgezogen ist;
Komprimieren des Vorformlings zwischen den Formabschnitten derart, dass die gegenüberliegenden Seiten des Vorformlings innerhalb der Hohlräume formgestaltet werden, um die Kammer (100) festzulegen und die zweite Bindung (101) unmittelbar benachbart der Kammer zu bilden, während die Rahmen sich in der zurückgezogenen Position befinden.

## Revendications

1. Moule (110) pour mouler une chambre (100) remplie d'un fluide, ce moule comprenant :
- une première partie de moule (120) comportant une première surface (121) et une première cavité (122) formée dans la première surface, cette première partie de moule comportant un premier cadre continu (124) ne comportant pas d'espaces, ou d'entailles pour des aiguilles ou des broches de soufflage et s'étendant en totalité autour de la première cavité, ce premier cadre pouvant être déplacé d'une position s'étendant vers l'extérieur au-delà de la première surface vers une position au moins partiellement rétractée dans la première partie de moule, et
- une seconde partie de moule (130) qui comporte une seconde surface (131) et une seconde cavité (132) formée dans la seconde surface, cette seconde partie de moule (130) comportant un second cadre (134) ne comportant pas d'espaces ou d'entailles pour des aiguilles ou des broches de soufflage et s'étendant autour de la seconde cavité (132), le second cadre de la seconde partie de moule pouvant être déplacé d'une position s'étendant vers l'extérieur au-delà de la seconde surface (131) vers une position au moins partiellement rétractée dans la seconde partie de moule,
- la première cavité et la seconde cavité ayant la forme de la chambre lorsque les parties de moule sont reliées.

2. Moule (110) conforme à la revendication 1,
dans lequel
le premier cadre (124) est situé à distance de la première cavité (122).

3. Moule (110) conforme à la revendication 1,
dans lequel
le premier cadre (124) est monté sur des ressorts (126), ces ressorts étant essentiellement non comprimés lorsque le premier cadre s'étend vers l'extérieur au-delà de la première surface (121) et étant comprimés lorsque le premier cadre est au moins partiellement rétracté dans la première partie de moule (120).

4. Moule (110) conforme à la revendication 1,
dans lequel
le premier et le second moule sont alignés lorsque les parties de moule sont reliées.

5. Moule (110) conforme à la revendication 4,
dans lequel
le premier cadre (124) et le second cadre (134) ont des configurations rectangulaires.

6. Moule (110) conforme à la revendication 1,
dans lequel
la première partie de moule (120) comporte deux premières cavités (122) et la seconde partie de moule (130) comporte deux secondes cavités (132).

7. Procédé de fabrication d'une chambre (100) remplie par un fluide en utilisant le moule (110) conforme à la revendication 1, ce procédé comprenant les étapes consistant à :
- former une première liaison (112) entre des côtés opposés d'une préforme (111) avec un premier et un second cadre (124, 134) ne comportant pas d'espaces ou d'entailles pour des aiguilles ou des broches de soufflage pour fermer hermétiquement un premier volume d'un fluide dans la préforme, cette première liaison s'étendant en totalité autour du premier volume du fluide,
- former une seconde liaison (101) située à distance vers l'intérieur de la première liaison et entre des côtés opposés de l'ébauche pour fermer hermétiquement un second volume de fluide dans l'ébauche, ce second volume de fluide étant inférieur au premier volume de fluide, et une partie du premier volume de fluide,
- mettre en forme la chambre à partir d'une partie de l'ébauche qui est située vers l'intérieur de la seconde liaison, et
- séparer la chambre de la partie restante de l'ébauche au niveau de la seconde liaison.

8. Procédé conforme à la revendication 7, comprenant en outre une étape consistant à former une troisième liaison qui est située à distance vers l'intérieur de la première liaison (112) et entre des côtés opposés de l'ébauche (111) pour piéger un troisième volume de fluide à la partie interne de l'ébauche, ce troisième volume de fluide étant inférieur au premier volume de fluide, et une partie du premier volume de fluide et le troisième volume de fluide étant séparés du second volume de fluide.

9. Procédé conforme à la revendication 8, comprenant en outre une étape consistant à séparer une autre chambre (100) de la partie restante de l'ébauche au niveau de la troisième liaison.

10. Procédé conforme à la revendication 7, comprenant en outre une étape consistant à incorporer la chambre dans un article chaussant (210).

11. Procédé conforme à la revendication 7, comprenant les étapes consistant à :
- positionner l'ébauche entre :
la première partie de moule (120) et la seconde partie de moule (130),
- déplacer les parties de moule vers l'ébauche de sorte que les cadres viennent en contact et compriment des côtés opposés de l'ébauche pour former la première liaison (112) entre les côtés opposés de l'ébauche, et
- comprimer l'ébauche entre les parties de moule de sorte que des côtés opposés de l'ébauche soient mis en forme à l'intérieur des cavités pour définir la chambre et former la seconde liaison (101), directement adjacente à la chambre.

12. Procédé conforme à la revendication 11,
selon lequel
l'étape consistant à déplacer les parties de moule (120, 130) comporte une étape consistant à positionner les cadres (124, 134) dans une position déployée, le premier cadre s'étendant vers l'extérieur à partir de la première surface (121) et le second cadre s'étendant vers l'extérieur à partir de la seconde surface (131).

13. Procédé conforme à la revendication 12,
selon lequel
l'étape consistant à comprimer l'ébauche (111) comporte une étape consistant à positionner les cadres (124, 134) dans une position rétractée, le premier cadre étant au moins partiellement rétracté dans la première partie de moule (120) et le second cadre étant au moins partiellement rétracté dans la seconde partie de moule (130).

14. Procédé conforme à la revendication 11,
selon lequel
l'étape consistant à comprimer l'ébauche (111) comprend une étape consistant à former un vide entre l'ébauche et chacune des première et seconde surfaces (121, 131).

15. Procédé conforme à la revendication 7, comprenant les étapes consistant à :
- placer l'ébauche (111) entre :
la première partie de moule (120) et la seconde partie de moule (130),
- positionner les cadres dans une position déployée, le premier cadre s'étendant vers l'extérieur à partir de la première surface et le second cadre s'étendant vers l'extérieur à partir de la seconde surface,
- les cadres étant en position déployée, déplacer les parties de moule vers l'ébauche de sorte que les cadres viennent en contact et compriment des côtés opposées du moule pour (a), former la première liaison (112) entre les côtés opposés de l'ébauche (b) fermer hermétiquement le premier volume de fluide à l'intérieur de l'ébauche,
- positionner les cadres dans une position rétractée, le premier cadre étant au moins partiellement rétracté dans la première partie de moule et le second cadre étant au moins partiellement rétracté dans la seconde partie de moule,
- les cadres étant en position rétractée, comprimer l'ébauche entre les parties de moule de sorte que les côtés opposés de l'ébauche soient mis en forme dans les cavités pour définir la chambre (100) et forment la seconde liaison (101) directement adjacente à la chambre.
